# EUROPÄISCHE PATENTSCHRIFT

(11) **EP 2 009 397 B1**
(45) Veröffentlichungstag und Bekanntmachung des Hinweises auf die Patenterteilung: **08.01.2014**
(21) Anmeldenummer: 08103894.5
(22) Anmeldetag: 09.05.2008
(51) Int. Cl.: G01C 21/34, G01C 21/36

(54) **Verfahren und Vorrichtung zur Übermittlung von Informationen an Fahrzeuginsassen**
Method and device for transferring information to passengers in a vehicle
Procédé et dispositif de transmission d'informations aux passagers d'un véhicule

(30) Priorität: 29.06.2007 DE 102007030243
(43) Veröffentlichungstag der Anmeldung: 31.12.2008
(73) Patentinhaber: ROBERT BOSCH GMBH, 70442 Stuttgart (DE)
(72) Erfinder: Faenger, Jens, Palo Alto, 94304 (US); Kynast, Andreas, 70176, Stuttgart (DE)

(56) Entgegenhaltungen:
- EP-A1- 0 985 906
- EP-A1- 1 378 724
- EP-A1- 1 586 861
- WO-A1-2006/029749
- GB-A- 2 413 021

## Beschreibung

Die Erfindung betrifft ein Verfahren zur Übermittlung von Informationen an Fahrzeuginsassen, wie es beispielsweise bei interaktiven Reiseführern zum Einsatz kommen kann, und eine Vorrichtung zur Durchführung des Verfahrens.

### Stand der Technik

Es ist bekannt, hinterlegte Datensätze, welche die Umgebung eines Fahrzeuges zwei- bzw. dreidimensional beschreiben, zu Zwecken der Orientierung oder zur Navigation auszuwerten. Derartige Datensätze können beispielsweise auf kommerziell verfügbaren Geoinformationssystemen (GIS) oder anwenderspezifisch generierten Daten basieren.

Es ist weiterhin bekannt, derartige Datensätze in einer Weise auszuwerten, die es ermöglicht, in Abhängigkeit von der räumlichen Distanz zu markanten Punkten in der Umgebung eines Fahrzeuges, sogenannten POIs (Points of Interest), an die Insassen eines Fahrzeuges Informationen zu übermitteln, welche die jeweiligen POIs betreffen. Es ist auch bekannt, eine derartige Informationsübermittlung zu automatisieren und Informationsausgaben in akustischer bzw. visueller Form in Abhängigkeit von einer räumlichen Distanz zu POIs automatisch vorzunehmen. Beispielsweise werden in Flugzeugen, Fahrzeugen oder Schiffen elektronische Übersichtskarten eingesetzt, in denen die jeweils aktuelle Reiseposition angezeigt wird. Bei Annäherung an einen markanten POI kommt es zur automatischen Informationsübermittlung an einen Fahrgast. Ein Nachteil derartiger Systeme besteht darin, dass nicht berücksichtigt wird, ob der jeweilige POI für den Betrachter tatsächlich sichtbar ist oder durch andere Gebäude oder andere Hindernisse, beispielsweise Bäume, Berge etc. verdeckt ist. Insbesondere bei automatisierten bzw. interaktiven Reiseführersystemen hat sich jedoch gezeigt, dass die Informationsübermittlung wesentlich effektiver bzw. einprägsamer erfolgt, wenn eine Verknüpfung der dargebotenen Informationen mit einem visuellen direkten Eindruck des beschriebenen Objektes möglich ist. Eine manuelle Prüfung durch begleitende Reiseleiter oder andere Begleitpersonen parallel zum Einsatz automatisierter bzw. interaktiver Reiseführer stellt in der Regel einen zu hohen Aufwand dar.

Die Offenlegungsschrift EP 1 378 724 A1 zeigt ein Routenführungssystem, welches auf einer visuellen Aktivität eines Fahrers basiert.

Die Offenlegungsschrift EP 0 985 906 A1 zeigt ein Verfahren und eine Vorrichtung zur Bereitstellung von Informationsdaten in Zusammenhang mit einem GPS-System.

Die Offenlegungsschrift GB 2 413 021 A zeigt eine Navigationshilfe bei einer Streckenführung eines Navigationssystems.

Die Offenlegungsschrift WO 2006/029749 zeigt einen Informationspunkt mit insbesondere einer Einrichtung zum Bereitstellen einer Datenstruktur, die Einträge über verschiedene Objekte aufweist, wobei jedem Objekt ein begrenzter geographischer Bereich zugeordnet ist und wobei jedem Objekt eine Objektinformation zugeordnet ist.

Die Offenlegungsschrift EP 1586 861 A1 zeigt ein Verfahren und eine Vorrichtung zur Darstellung von Fahrerinformationen.

### Offenbarung der Erfindung

### Technische Aufgabe

Die Aufgabe der Erfindung besteht darin, eine Möglichkeit anzugeben, um Informationen, welche markante Punkte in der Umgebung von Fahrzeugen betreffen, automatisiert und möglichst effektiv und komfortabel an Insassen dieser Fahrzeuge zu übermitteln.

### Technische Lösung

Die Aufgabe wird erfüllt durch ein Verfahren mit den Merkmalen von Anspruch 1. Die Ansprüche 2 bis 8 betreffen vorteilhafte Ausgestaltungen des erfindungsgemäßen Verfahrens. Anspruch 9 betrifft eine Vorrichtung zur Durchführung dieses Verfahrens, und die Ansprüche 10 bis 17 geben vorteilhafte Ausgestaltungen dieser Vorrichtung an.

Der Kern der Erfindung besteht darin, unter Verwendung von Daten, welche die Umgebung eines Fahrzeuges beschreiben, eine Rekonstruktion des Sichtbereiches von mindestens einer Betrachterposition aus dem Fahrzeug auf ein in der Umgebung des Fahrzeuges befindliches markantes fixes Objekt (POI) vorzunehmen, ohne dass sich das Fahrzeug oder der Betrachter zum Zeitpunkt der Rekonstruktion tatsächlich auf dieser Betrachterposition befinden muss. Diese Rekonstruktion kann zunächst ausschließlich auf der Grundlage der verfügbaren Daten vorgenommen werden. Dadurch wird es möglich, bei der Auswahl der Art und Weise einer auf POIs bezogenen Informationsübermittlung zu berücksichtigen, ob die entsprechenden POIs, auf die sich die zu übermittelnden Informationen beziehen sollen, für den Betrachter tatsächlich sichtbar sind oder sein werden. Ein entsprechender Sichtbarkeitshinweis kann so problemlos und automatisiert in die einer derartigen virtuellen Sichtbarkeitsprüfung nachgeordnete Informationsübermittlung bzw. Ankündigung von POIs einbezogen werden, wenn sich ein Fahrzeug einer derart im Vorfeld geprüften Betrachterposition nähert.
Unter Berücksichtigung von topographischen Daten und/oder anderen die Umgebung eines Fahrzeuges beschreibenden Daten, die in urbanen Räumen vorzugsweise die Lage von Gebäuden bzw. Straßenzügen betreffen werden, kann eine derartige Sichtbarkeitsprüfung zwischen einer vorgegebenen Betrachterposition und einem POI vorgenommen werden, indem die Rekonstruktionen des Sichtbereiches erst kurz vor der voraussichtlichen Annäherung des Betrachters an die Betrachterposition vorgenommen wird. Alternativ dazu kann die datenbasierte Rekonstruktion von Sichtbereichen auch mit größerem zeitlichen Abstand im Vorfeld einer geplanten Annäherung, beispielsweise im Zuge einer Kompilierung eines für das erfindungsgemäße Verfahren einzusetzenden Datensatzes, vorgenommen werden. Die Erfindung umfasst in jedem Fall ein Verfahren zur automatisierten Übermittlung von objektbezogenen Informationen an mindestens einen Fahrzeuginsassen als einen bewegten Betrachter in Abhängigkeit von seiner Position, bei dem aus Daten, welche die Umgebung des Fahrzeuges beschreiben, der Sichtbereich von mindestens einer Betrachterposition in Richtung auf ein in der Umgebung des Betrachters befindliches fixes Objekt (im Folgenden teilweise stellvertretend als POI bezeichnet), auf welches sich die Informationen zumindest teilweise beziehen, rekonstruiert wird, wobei geprüft wird, in welcher Art und Weise das Objekt sichtbar ist, wobei in Abhängigkeit vom Ergebnis dieser Sichtbarkeitsprüfung festgelegt wird, in welcher Weise und/oder wann hinterlegte Informationen an den Betrachter im Fahrzeug übermittelt werden. Unter objektbezogenen Informationen sind dabei jegliche Informationen zu verstehen, die einem Betrachter in einem Fahrzeug aus Anlass seiner Annäherung an ein betreffendes Objekt übermittelt werden sollen. Diese können beispielsweise in einer bloßen Ankündigung bzw. Benennung eines betreffenden POIs bestehen oder umfangreiche Hintergrundinformationen zu einzelnen POIs, evtl. auch in Relation zu anderen benachbarten POIs, wie das beispielsweise im touristischen Bereich angebracht sein kann, umfassen. Unter Art und Weise der Sichtbarkeit eines Objektes ist zumindest der Grad der Verdeckung durch andere Objekte, sowie die Dauer der Sichtbarkeit, sowie die Sichtbarkeit in Relation zu anderen sichtbaren Objekten zu verstehen, soweit diese Eigenschaften zumindest teilweise datenbasiert rekonstruierbar sind.

Vorrichtungen zur Durchführung der erfindungsgemäßen Informationsübermittlung umfassen also zumindest eine Datenverarbeitungseinheit mit Zugriff auf Daten, welche die Fahrzeugumgebung beschreiben, insbesondere auf geometrische Daten von Objekten, auf die sich die zu übermittelnden Informationen beziehen, in Verbindung mit topografischen Daten zumindest dieser Objekte. Die Datenverarbeitungseinheit verfügt über Mittel, anhand dieser Daten eine Prüfung der Sichtbarkeit einzelner im Datenbestand enthaltener Objekte von vorgegebenen Positionen vorzunehmen. Des weiteren können Mittel umfasst sein, um im Ergebnis der positionsabhängigen Sichtbarkeitsprüfung zu einzelnen Objekten gespeicherte Daten mit Informationen zu verknüpfen, aus denen die Art und Weise der Sichtbarkeit der Objekte von den geprüften Positionen entnommen werden kann.

Vorrichtungen zur Durchführung der erfindungemäßen Informationsübermittlung umfassen des weiteren mindestens eine Ausgabeeinheit, über die aus dem Datenbestand gewonnene Informationen zu interessierenden Objekten und Informationen über die Sichtbarkeit dieser Objekte in Abhängigkeit von mindestens einer Betrachterposition an mindestens einen Fahrzeuginsassen übermittelt werden. Zur Automatisierung dieser Informationsübermittlung ist des weiteren mindestens ein Mittel enthalten, welches eine Synchronisation der Informationsübermittlung mit dem Erreichen von Positionen sichert, an denen die jeweiligen Informationen zur Verfügung gestellt werden sollen.

### Vorteilhafte Wirkungen

Durch die Nutzung des erfindungsgemäßen Verfahrens ergeben sich eine Reihe von Vorteilen. Dadurch, dass das Blickfeld eines Betrachters vorhergesagt werden kann, ergibt sich die Möglichkeit, die Art und Weise der Informationsübermittlung entsprechend an das Wahrnehmungsverhalten eines zu informierenden Betrachters anzupassen. Das gilt sowohl für eine Nutzung markanter Objekte als Marken für die Orientierung von Fahrzeugführern, als auch für eine Ankündigung bzw. Informationsbereitstellung zu interessanten Objekten (POIs) beispielsweise durch interaktive Reiseführer. Durch das erfindungsgemäße Verfahren lassen sich eine visuelle und akustische Informationsübermittlung unmittelbar mit visuellen direkten Eindrücken von einem beschriebenen Objekt verknüpfen. Durch die auf diese Weise erzielbare Synchronisation zwischen Hinweisen auf bestimmte POIs und der tatsächlich von einem Betrachter wahrnehmbaren Umgebung ergibt sich eine effektivere und nachhaltigere Informationsvermittlung.

Das erfindungsgemäße Verfahren ist in besonders vorteilhafter Weise in sogenannten intelligenten oder interaktiven Reiseführern einsetzbar. Nicht sichtbare POIs können anders als sichtbare POIs angekündigt werden. Hinweise auf nicht sichtbare POIs können für eine spätere individuelle Routenplanung übermittelt werden. Das erfindungsgemäße Verfahren ermöglicht es ebenso, den Sichtbereich von zahlreichen Betrachterpositionen auf vorgegebene POIs zu rekonstruieren. Dadurch wird ermöglicht, in Abhängigkeit von der Rekonstruktion der Sichtbereiche eine automatisierte Routenplanung derart vorzunehmen, dass Betrachterpositionen mit einer guten Sichtbarkeit oder einer Mindestsichtbarkeit auf vorgegebene POIs erreicht bzw. empfohlen werden. In Abhängigkeit vom tatsächlichen Erreichen der jeweiligen Betrachterpositionen wird bei Annäherung an die Betrachterposition eine entsprechende Informationsübermittlung veranlasst. Aus der Rekonstruktion der Größe des Bereiches mit guter Sicht auf einen bestimmten POI lässt sich bei einer bekannten Geschwindigkeit eines Fahrzeuges die Verweildauer des Betrachters im Bereich guter Sichtbarkeit auf den POI, auf welchen sich zu übermittelnde Informationen zumindest teilweise beziehen sollen, ermitteln. Die automatische Übermittlung von Informationen kann so auf den Zeitpunkt des Erreichens des Bereiches guter Sichtbarkeit, sowie die jeweilige Verweildauer abgestimmt werden. Vorteilhafterweise ist die Informationsvermittlung einzuleiten, bevor ein Betrachter in den Bereich guter Sichtbarkeit gelangt. Das ist insbesondere von Vorteil, wenn für die jeweilige Informationsübermittlung eine längere Zeit benötigt wird, als ein Betrachter im jeweiligen Bereich guter Sichtbarkeit verweilt. Es ist des weiteren vorteilhaft, eine automatische Ankündigung eines POI vor Eintritt eines bewegten Betrachters in den auf einen POI gerichteten Sichtbarkeitsbereich vorzunehmen, um dem Betrachter zu ermöglichen, sich auf die Betrachtung des POI einzustellen und die zur Verfügung stehende Zeit, in der eine gute Sichtbarkeit des POI gegeben ist, voll ausschöpfen zu können. Analog zum dargestellten Verfahren kann auch der Sichtbereich von mindestens einer Betrachterposition auf mehrere in der Umgebung des Betrachters befindliche POIs rekonstruiert wird. Die übermittelten Informationen können auch Informationen zu mehreren benachbarten POIs umfassen, wobei sichtbare und nicht sichtbare POIs berücksichtigt werden können. Vorteilhafterweise kann auch eine Auswahl der zu übermittelnden Informationen nach einer Erfassung der Kopf-und/oder Augenposition eines Betrachters vorgenommen werden, wobei Informationen die POIs betreffen, welche in Blickrichtung des Betrachters liegen besonderes Gewicht beigemessen wird.

### Ausführungsformen der Erfindung

An Ausführungsbeispielen wird die Erfindung näher erläutert.
Es zeigen:
- Fig.1: eine Szene zur Verdeutlichung des erfindungsgemäßen Verfahrens mit einem Betrachter in einer Position mit freier Sicht auf einen POI;
- Fig.2: eine Szene mit einem Betrachter mit verdeckter Sicht auf einen POI;
- Fig.3: eine erfindungsgemäße Szene mit zahlreichen Betrachtern in einem Fahrzeug großer Erstreckung;
- Fig. 4: eine erfindungsgemäße Szene mit Betrachtern mit freier Sicht auf unterschiedliche POI;
- Fig. 5: eine Szene zur Verdeutlichung des zeitlichen Ablaufs des erfindungsgemäßen Verfahrens;
- Fig. 6: eine Szene zur Verdeutlichung des erfindungsgemäßen Verfahrens mit zusätzlicher Erfassung temporärer Sichthindernisse; und
- Fig. 7: ein Blockschaltbild eines automatischen Systems zur Übermittlung von Informationen nach dem erfindungsgemäßen Verfahren.

### Kurze Beschreibung der Zeichnungen

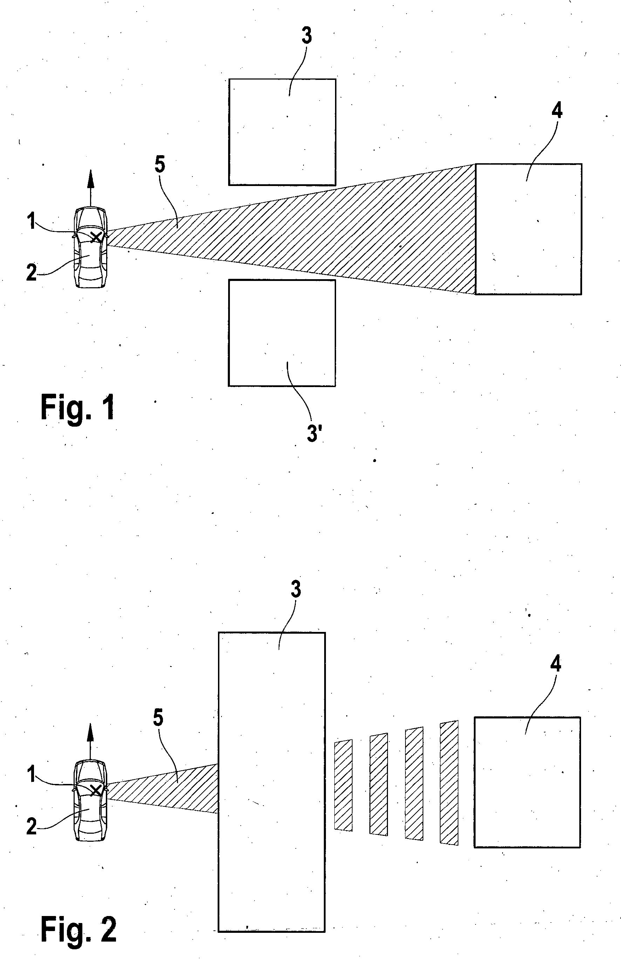

Fig.1 zeigt eine Szene zur Verdeutlichung des erfindungsgemäßen Verfahrens mit einem Betrachter in einer Position mit freier Sicht auf einen POI. Der Betrachter 1 befindet sich in einem Fahrzeug 2 und wird durch dieses in Pfeilrichtung bewegt. Auf der rechten Seite des Fahrzeuges 2 befindet sich eine Häuserzeile 3, 3'. Hinter der Häuserzeile 3, 3' befindet sich ein POI in Form eines größeren Gebäudes 4, zu welchem dem Betrachter 1 Informationen übermittelt werden sollen. Durch den Straßenverlauf, also den Abstand des Fahrzeuges 2 zur Häuserzeile 3, 3' und dem POI 4, und einer Lücke zwischen den Häusern 3, 3' der Häuserzeile ergibt sich in der dargestellten Position des Betrachters 1 ein Sichtbarkeitsbereich 5 in Richtung des POI 4, welcher im wesentlichen durch die einzelnen Häuser 3, 3' der Häuserzeile in seitlicher Richtung begrenzt wird. Durch die Ausdehnung des Gebäudes 4, welches einen POI darstellt, ergibt sich zudem, dass nur an einer bestimmten Position die vollständige Sichtbarkeit des Gebäudes 4 gegeben ist. Diese Position kann durch die virtuelle Sichtbarkeitsprüfung entsprechend des erfindungsgemäßen Verfahrens ermittelt werden, indem verschiedene benachbarte Betrachterpositionen in die Rekonstruktion des Sichtbereiches einbezogen werden. Den POI betreffende Informationen werden dem Betrachter 1 automatisch unmittelbar vor oder während des Erreichens der geeigneten Betrachterposition übermittelt, indem ein im Fahrzeug befindliches Informationssystem in Form eines interaktiven Reiseführers aktiviert wird und in visueller bzw. akustischer Form die gewünschten Informationen bereitstellt. Dadurch ist es dem Betrachter 1 möglich, die aufgenommenen Informationen mit dem direkten visuellen Eindruck vom POI 4 durch die erfindungsgemäß ermöglichte Betrachtung und entsprechende Synchronisation der Informationsübermittlung zu verknüpfen.

Fig.2 zeigt eine vergleichbare Szene mit einem Betrachter 1 in einem Fahrzeug 2, dessen Sicht auf einen POI 4 durch ein größeres Haus 3 verdeckt ist. In diesem Fall kann, wenn es durch Randbedingungen der Streckenführung erforderlich ist Informationen zu dem verdeckten POI 4 zu vermitteln, ohne das Erreichen einer Position mit freier Sicht auf den POI 4 abwarten zu können bzw. wenn eine solche Position überhaupt nicht erreicht wird, eine den POI betreffende automatisierte Informationsbereitstellung veranlasst werden, wobei auf die verdeckte Position des POI 4 Bezug genommen werden kann. Die Informationsbereitstellung kann dabei so erfolgen, dass sie eine zeitliche Lücke zwischen andere POIs (nicht dargestellt) betreffenden Informationsblöcken füllt, deren Übermittlung erfindungsgemäß durch Erreichen von Betrachterpositionen mit guter Sicht auf die jeweiligen POIs vorgenommen wird. Während der Informationsübermittlung zum nicht sichtbaren POI 4 erfolgt eine virtuelle, videografische oder fotografische Darstellung des nicht sichtbaren POI 4 auf einem Display (nicht dargestellt).

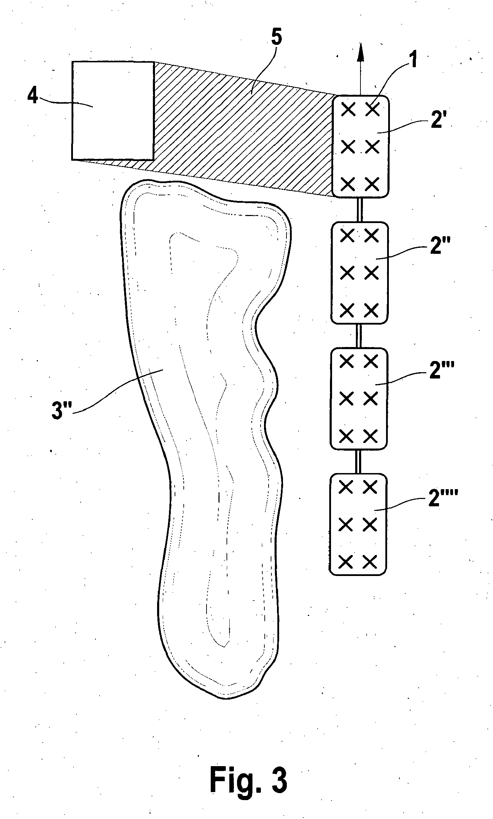

Fig.3 zeigt eine erfindungsgemäße Szene mit zahlreichen Betrachtern (Positionen durch Kreuze angedeutet) in einem Fahrzeugverbund aus mehreren Waggons 2', 2", 2"', 2"" großer Erstreckung, wie das beispielsweise in Reisezügen der Fall ist. Dabei kann das Problem auftreten, dass die Ausdehnung eines Bereiches 5 mit guter Sicht auf einen bestimmten POI 4 wesentlich kleiner ist, als die Ausdehnung des Fahrzeuges bzw. des Fahrzeugverbundes 2', 2", 2"', 2"" und somit des Bereiches, in dem sich die zu informierenden Betrachter aufhalten können. Das erfindungsgemäße Verfahren lässt sich in diesem Fall anwenden, indem die Sichtbarkeitsprüfung für verschiedene Betrachterpositionen innerhalb des Reisezuges vorgenommen wird. Die automatisierte Informationsübermittlung den POI 4 betreffend erfolgt dann für einzelne Betrachterpositionen in zeitlicher Staffelung. Eine mögliche und vorteilhafte Form der Staffelung ergibt sich, wenn die Informationsübermittlung in größeren Raumeinheiten, beispielsweise den Waggons 2', 2", 2"', 2"" gleichzeitig erfolgt und eine Staffelung lediglich zwischen den größeren Raumeinheiten vorgenommen wird. Dadurch werden mehrere Betrachterpositionen innerhalb des Fahrzeugverbundes zu Gruppen zusammengefasst, für welche die Informationen einheitlich übermittelt werden.

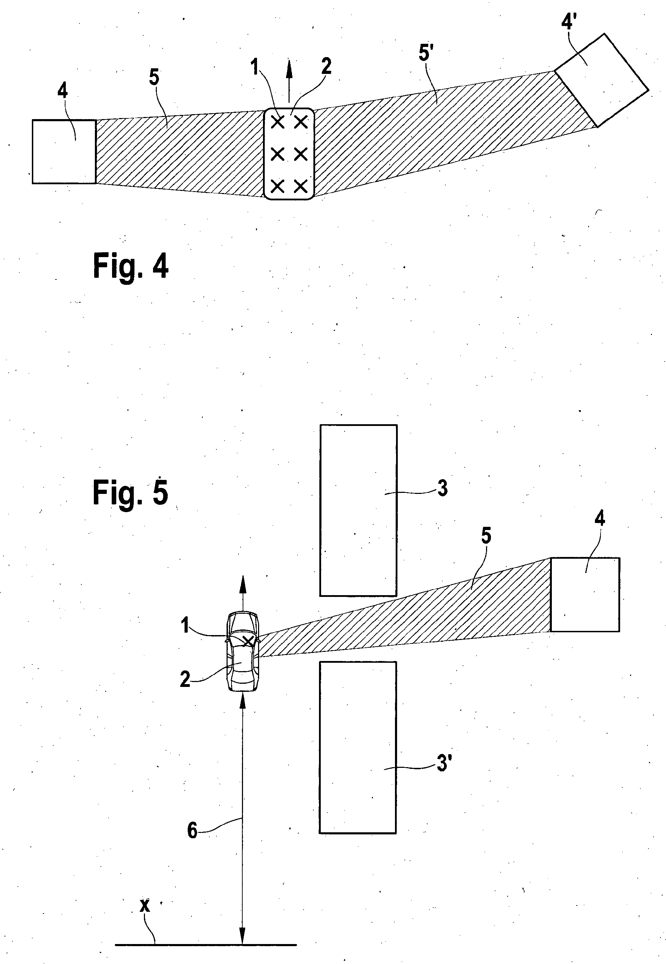

Fig.4 zeigt eine erfindungsgemäße Szene mit Betrachtern (Positionen durch Kreuze angedeutet) mit freier Sicht auf unterschiedliche POI 4, 4', wobei mehrere Betrachter jeweils gleichzeitig mindestens einen POI 4, 4' in ihrem Sichtbarkeitsbereich 5, 5' haben und ein anderer POI 4', 4 für diese Betrachter verdeckt ist. Dieser Fall tritt beispielsweise bei gleichzeitiger Passage mehrerer POIs auf, die sich auf unterschiedlichen Seiten eines größeren Fahrzeuges 2, beispielsweise eines Reisebusses, befinden. In diesem Falle benötigen die Insassen auf der jeweiligen Seite des Reisebusses vorzugsweise Informationen, welche den jeweils auf ihrer Seite sichtbaren POI 4, 4' betreffen. Diese Anforderung kann ebenfalls durch das erfindungsgemäße Verfahren erfüllt werden, indem die Prüfung der Sichtbarkeitsbereiche 5, 5' für die beiden Seiten des Reisebusses bzw. beliebige zusammenfassbare Gruppen von Betrachterpositionen von einander unabhängig und gleichzeitig ausgeführt und mit der entsprechenden automatisierten Informationsübermittlung in Form von Ansagen und/oder visuellen Darstellungen auf einem Monitor/Display verknüpft wird.

Fig.5 zeigt eine Szene zur Verdeutlichung des zeitlichen Ablaufs des erfindungsgemäßen Verfahrens insbesondere in Fällen, in denen die Passage eines bewegten Betrachters 1 in einem Fahrzeug 2 durch einen Bereich guter Sichtbarkeit 5, vorliegend begrenzt durch Häuser 3, 3', wesentlich kürzer dauert, als die zur Informationsübermittlung bzw. die zur Einstimmung des Betrachters 1 auf den visuellen Eindruck eines anzukündigenden POI 4 benötigte Zeit. In diesem Falle ist die automatisierte Informationsübermittlung vorzugsweise zu veranlassen, bevor der bewegte Betrachter 1 in den Bereich guter Sichtbarkeit 5 auf den betreffenden POI 4 gelangt. Bei in Fahrzeugen befindlichen Betrachtern 1 ist deren Position und Geschwindigkeit bekannt, was den Zeitpunkt ihres voraussichtlichen Eintritts in den Bereich guter Sichtbarkeit 5 vorherzusagen gestattet. Aus der Geschwindigkeit des Fahrzeuges 2 lässt sich gleichzeitig eine Position x ableiten, an der die automatisierte Informationsübermittlung zu beginnen hat, um bei Erreichen des Sichtbarkeitsbereiches 5 die Informationen bereits zur Verfügung gestellt zu haben. Die Position x liegt im vorliegenden Beispiel um eine bestimmte Weglänge 6 vor der Position, an der die zu übermittelnde Information bezüglich des POI 4 vollständig zur Verfügung stehen soll.

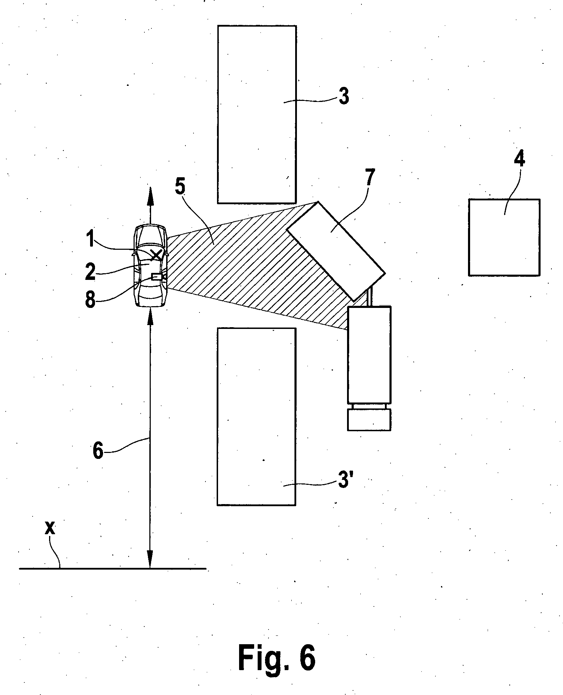

Fig.6 zeigt eine Szene zur Verdeutlichung des erfindungsgemäßen Verfahrens mit zusätzlicher Erfassung temporärer Sichthindernisse 7, vorliegend durch einen parkenden LKW dargestellt. In diesem Falle erfolgt zusätzlich eine tatsächliche Prüfung der Sichtbarkeit der gemäß der Rekonstruktion voraussichtlich sichtbaren Objekte, indem Sichthindernisse detektiert werden, wobei das Ergebnis der tatsächlichen Prüfung der Sichtbarkeit ebenfalls bei der Festlegung, in welcher Weise und/oder wann hinterlegte Informationen an den Betrachter im Fahrzeug übermittelt werden, berücksichtigt wird. Vorliegend erfolgt zusätzlich zur Rekonstruktion des Sichtbarkeitsbereichs 5 eines durch ein Fahrzeug 2 bewegten Betrachters 1 von einer vorgegebenen Betrachterposition aus eine tatsächliche Überprüfung der Sichtbarkeit des interessierenden POI 4 bei Eintritt des Fahrzeuges 2 in den Sichtbarkeitsbereich 5. Zu diesem Zwecke umfasst das dann einzusetzende System Mittel zur Bilderfassung, beispielsweise elektronische Kameras 8, die bei Erreichen der vorbearbeiteten Betrachterposition einen Abgleich der aus bereits ausgewerteten Datensätzen gewonnenen Sichtbarkeitsprognose mit einem tatsächlich aktuell aufgenommenen Bild vornehmen. Erkannte Abweichungen von der prognostizierten Sichtbarkeit des POI 4 werden in der Wahl der Art und Weise und des Zeitraums der automatisch vorgenommenen Informationsübermittlung sofort berücksichtigt, beispielsweise indem die bereits übermittelten Informationen, die aufgrund des zeitlichen Vorlaufs bereits während der Passage des Fahrzeuges 2 ab einer Position x während des Durchfahrens der Weglänge 6 zwangsläufig übermittelt worden sind, um eine Routen-änderungsanfrage ergänzt werden.

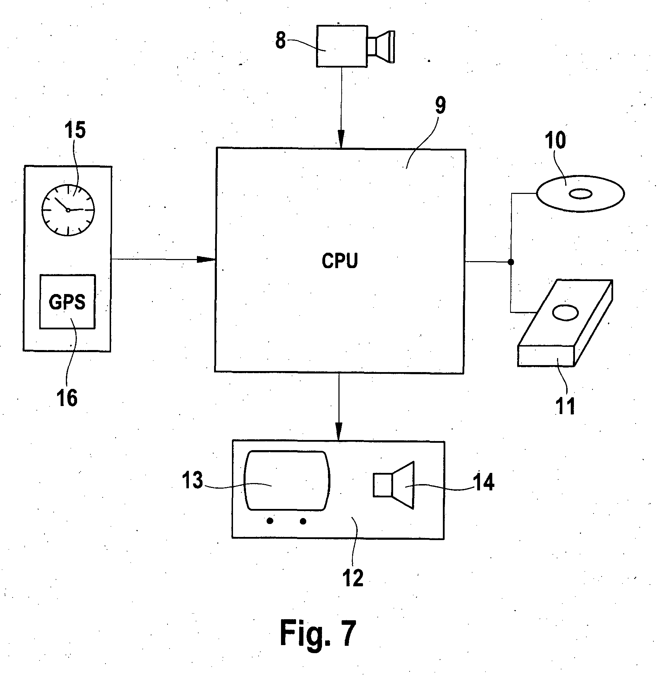

Fig. 7 zeigt ein Blockschaltbild einer in einem Fahrzeug installierten Vorrichtung in Form eines automatischen Systems zur Übermittlung von Informationen nach dem erfindungsgemäßen Verfahren. Dieses umfasst eine Datenverarbeitungseinheit 9 in Verbindung zu Speichermedien. Diese Speichermedien umfassen Wechseldatenträger 10 sowie fest im System installierte Massenspeicher 11. Insbesondere der Zugriff auf Wechseldatenträger 10 ermöglicht eine einfache Anpassung des erfindungsgemäßen Systems an sich ändernde Anforderungen bzw. topografische Gegebenheiten. Die Speichermedien 10, 11 enthalten Daten, welche die Fahrzeugumgebung beschreiben. Dazu zählen geometrische Daten von Objekten 4, 4', auf die sich die zu übermittelnden Informationen beziehen. Des weiteren sind topografische Daten enthalten, aus denen die relativen Positionen mehrerer Objekte 4, 4' zueinander bzw. zu tatsächlichen oder virtuellen Betrachterpositionen abgeleitet werden können. Die Datenverarbeitungseinheit 9 verfügt über Mittel, vorzugsweise in Form geeigneter Software, anhand dieser Daten eine Prüfung der Sichtbarkeit einzelner im Datenbestand enthaltener Objekte 4, 4' von vorgegebenen Positionen vorzunehmen.

Die Datenverarbeitungseinheit 9 verfügt des weiteren über Mittel, um im Ergebnis der positionsabhängigen Sichtbarkeitsprüfung zu einzelnen Objekten 4, 4' gespeicherte Daten mit Informationen zu verknüpfen, aus denen die Art und Weise der Sichtbarkeit der Objekte 4, 4' von den geprüften Positionen aus betrachtet entnommen werden kann. Werden die mit diesen Informationen verknüpften Daten entsprechend gespeichert, können Hinweise zur Art und Weise der Sichtbarkeit einzelner Objekte 4, 4' von bestimmten Betrachterpositionen aus wiederholt abgerufen werden, ohne jedes Mal eine erneute Sichtbarkeitsprüfung vornehmen zu müssen.

Des weiteren ist eine Ausgabeeinheit 12 umfasst, über die aus dem Datenbestand gewonnene Informationen zu interessierenden Objekten 4, 4' und Informationen über die Sichtbarkeit dieser Objekte 4, 4' in Abhängigkeit von mindestens einer Betrachterposition an mindestens einen Fahrzeuginsassen übermittelt werden. Typischerweise enthält diese Ausgabeeinheit 12 Mittel zur visuellen Informationsübermittlung in Form eines Monitors 13 und Mittel zur akustischen Informationsübermittlung in Form eines Lautsprechers 14. Zur Automatisierung dieser Informationsübermittlung ist des weiteren ein Mittel enthalten, welches eine Synchronisation der Informationsübermittlung mit dem Erreichen von Positionen sichert, an denen die jeweiligen Informationen zur Verfügung gestellt werden sollen. Dazu zählt vorliegend ein Timer 15 sowie eine Vorrichtung zur automatischen Positionsbestimmung 16.

Im vorliegenden Ausführungsbeispiel ist des weiteren eine elektronische Kamera 8 umfasst, die nach Erreichen einer Betrachterposition für eine tatsächliche Überprüfung der Sichtbarkeit von Objekten 4, 4' benutzt werden kann, für die im Vorfeld bereits eine virtuelle Prüfung der Sichtbarkeit anhand der Daten erfolgt ist, auf die die Datenverarbeitungseinheit 9 zugreifen kann.

Die beschriebenen Komponenten 8 bis 16 können ein- oder mehrfach in einem erfindungsgemäßen System enthalten sein, sich an einer gemeinsamen oder unterschiedlichen Positionen befinden sowie in mehrere funktionelle Unterkomponenten untergliedert sein. Insbesondere eine Datenverarbeitungseinheit 9 im Sinne der Erfindung kann aus mehreren verbindbaren Teilen, beispielsweise einem zentralen Rechner sowie in mobilen Geräten untergebrachten Prozessoren, bestehen.

## Patentansprüche

1. Verfahren zur automatisierten Übermittlung von objektbezogenen Informationen an mindestens einen Fahrzeuginsassen als einen bewegten Betrachter (1) in Abhängigkeit von seiner Position, bei dem aus Daten, welche die Umgebung des Fahrzeuges (2) beschreiben, ein Sichtbereich von mindestens einer Betrachterposition in Richtung auf mindestens ein in der Umgebung des Betrachters (1) befindliches fixes Objekt (4), auf welches sich die Informationen zumindest teilweise beziehen, rekonstruiert wird, wobei geprüft wird, in welcher Weise das Objekt (4) von dieser Betrachterposition sichtbar ist, wobei in Abhängigkeit vom Ergebnis dieser Sichtbarkeitsprüfung festgelegt wird, in welcher Weise und/oder wann hinterlegte Informationen an den Betrachter (1) im Fahrzeug (2) übermittelt werden, **dadurch gekennzeichnet, dass** die Ausführung des Verfahrens für mehrere Betrachterpositionen innerhalb eines Fahrzeuges (2) oder Fahrzeugverbundes (2', 2", 2"', 2"") voneinander unabhängig erfolgt und wobei jeweils mehrere Betrachterpositionen innerhalb eines Fahrzeuges (2) oder Fahrzeugverbundes (2', 2", 2"', 2"") zu Gruppen zusammengefasst werden, für welche die Informationen einheitlich übermittelt werden.

2. Verfahren nach Anspruch 1, **dadurch gekennzeichnet, dass** aus der Geschwindigkeit des Fahrzeuges (2) die voraussichtliche Verweildauer des Betrachters (1) in einem Bereich (5) mit guter Sicht auf ein in der Umgebung des Betrachters (1) befindliches Objekt (4) ermittelt wird und eine automatische akustische oder visuelle Übermittlung von Informationen zu diesem Objekt (4) zu einem Zeitpunkt begonnen wird, der sichert, dass alle das Objekt (4) betreffenden Informationen übermittelt sind, bevor der Betrachter (1) den Bereich (5) mit guter Sicht auf dieses Objekt (4) verlässt.

3. Verfahren nach Anspruch 1 oder 2, **dadurch gekennzeichnet, dass** die übermittelten Informationen zumindest die Ankündigung sichtbar werdender Objekte (4, 4') in der Umgebung des Betrachters (1) umfassen und die Ankündigung sichtbar werdender Objekte (4, 4') unter Ankündigung der zu erwartenden Art und Weise der Sichtbarkeit der Objekte (4, 4') vorgenommen wird, bevor die jeweiligen Objekte (4, 4') für den Betrachter sichtbar werden.

4. Verfahren nach Anspruch 3, **dadurch gekennzeichnet, dass** zusätzlich eine tatsächliche Prüfung der Sichtbarkeit der gemäß der Rekonstruktion voraussichtlich sichtbaren Objekte (4, 4') vorgenommen wird, indem Sichthindernisse (7) detektiert werden, wobei das Ergebnis der tatsächlichen Prüfung der Sichtbarkeit ebenfalls bei der Festlegung, in welcher Weise und/oder wann hinterlegte Informationen an den Betrachter (1) im Fahrzeug (2) übermittelt werden, berücksichtigt wird.

5. Verfahren nach einem der Ansprüche 1 bis 4, **dadurch gekennzeichnet, dass** der Sichtbereich von mindestens einer Betrachterposition auf mehrere in der Umgebung des Betrachters (1) befindliche Objekte (4, 4') rekonstruiert wird und/oder die übermittelten Informationen Informationen zu mehreren benachbarten Objekten (4, 4') umfassen.

6. Verfahren nach einem der Ansprüche 1 bis 5, **dadurch gekennzeichnet, dass** eine Auswahl der zu übermittelnden Informationen nach einer Erfassung der Kopf- und/oder Augenposition eines Betrachters (1) vorgenommen wird.

7. Verfahren nach einem der Ansprüche 1 bis 6, **dadurch gekennzeichnet, dass** Informationen zu nicht sichtbaren Objekten (4, 4') übermittelt und mit einer virtuellen, videografischen oder fotografischen Darstellung der nicht sichtbaren Objekte (4, 4') auf einem Anzeigemittel verbunden werden.

8. Verfahren nach einem der Ansprüche 1 bis 7, **dadurch gekennzeichnet, dass** eine Routenplanung umfasst ist, die eine voraussichtliche Sichtbarkeit vorgegebener Objekte (4, 4') sichert.

9. Vorrichtung zur Durchführung des Vefahrens nach einem der Ansprüche 1 bis 8, umfassend mindestens eine Datenverarbeitungseinheit (9) mit Zugriff auf Speichermedien (10, 11), auf denen sich Daten befinden, welche die Fahrzeugumgebung beschreiben, wobei die Datenverarbeitungseinheit (9) über Mittel verfügt, anhand dieser Daten eine Prüfung der Sichtbarkeit einzelner im Datenbestand enthaltener Objekte (4, 4') von vorgegebenen Positionen vorzunehmen und Informationen über die Art und Weise der Sichtbarkeit der Objekte (4, 4') von den geprüften Positionen aus zu gewinnen, mindestens eine Ausgabeeinheit (12), über die aus dem Datenbestand gewonnene Informationen zu einzelnen Objekten (4, 4') und Informationen über die Art und Weise Sichtbarkeit dieser Objekte (4, 4') in Abhängigkeit von mindestens einer Betrachterposition an mindestens einen Fahrzeuginsassen übermittelt werden können, und mindestens ein Mittel (15, 16) zur Synchronisation, welches ausgelegt ist, um für eine Synchronisation der Informationsübermittlung mit dem Erreichen von Positionen zu sorgen, an denen die übermittelten Informationen zur Verfügung gestellt werden sollen **dadurch gekennzeichnet, dass** die Vorrichtung so eingerichtet ist, dass die Ausführung des Verfahrens für mehrere Betrachterpositionen innerhalb eines Fahrzeuges (2) oder Fahrzeugverbundes (2', 2", 2"', 2"") voneinander unabhängig erfolgt und wobei jeweils mehrere Betrachterpositionen innerhalb eines Fahrzeuges (2) oder Fahrzeugverbundes (2', 2", 2"', 2"") zu Gruppen zusammengefasst werden, für welche die Informationen einheitlich übermittelt werden.

10. Vorrichtung nach Anspruch 9, **dadurch gekennzeichnet, dass** die Speichermedien mindestens einen Wechseldatenträger (10) umfassen.

11. Vorrichtung nach Anspruch 9 oder 10, **dadurch gekennzeichnet, dass** die Speichermedien mindestens einen fest installierten Massenspeicher (11) umfassen.

12. Vorrichtung nach einem der Ansprüche 9 bis 11, **dadurch gekennzeichnet, dass** die Mittel zur Synchronisation mindestens ein Mittel (16) zur automatischen Positionsbestimmung umfassen.

13. Vorrichtung nach einem der Ansprüche 9 bis 12, **dadurch gekennzeichnet, dass** die Mittel zur Synchronisation mindestens einen Timer (15) umfassen.

14. Vorrichtung nach einem der Ansprüche 9 bis 13, **dadurch gekennzeichnet, dass** die Ausgabeeinheit (12) Mittel zur visuellen (13) und akustischen (14) Informationsübermittlung verfügt.

15. Vorrichtung nach einem der Ansprüche 9 bis 14, **dadurch gekennzeichnet, dass** die Datenverarbeitungseinheit (9) über Mittel verfügt, um im Ergebnis der positionsabhängigen Sichtbarkeitsprüfung zu einzelnen Objekten (4, 4') gespeicherte Daten mit Informationen zu verknüpfen, aus denen die Art und Weise der Sichtbarkeit der Objekte (4, 4') von geprüften Positionen aus betrachtet entnommen werden kann.

16. Vorrichtung nach einem der Ansprüche 9 bis 15, **dadurch gekennzeichnet, dass** Mittel (8) umfasst sind, die nach Erreichen einer Betrachterposition für eine tatsächliche Überprüfung der Sichtbarkeit von Objekten (4, 4') benutzt werden können.

17. Vorrichtung nach einem der Ansprüche 9 bis 16, **dadurch gekennzeichnet, dass** die Vorrichtung zu einem interaktiven Reiseführer gehört.

## Claims

1. Method for the automated transmission of object-related information to at least one vehicle passenger as a moving observer (1) on the basis of his position, in which data which describe the environment of the vehicle (2) are used to reconstruct a viewing area from at least one observer position in the direction of at least one fixed object (4) which is in the environment of the observer (1) and to which the information at least partially relates, a check being carried out in order to determine how the object (4) is visible from this observer position, the result of this visibility check being used as a basis for defining how and/or when stored information is transmitted to the observer (1) in the vehicle (2), **characterized in that** the method is carried out for a plurality of observer positions inside a vehicle (2) or a vehicle assembly (2', 2", 2"', 2"") independently of one another, a plurality of observer positions inside a vehicle (2) or a vehicle assembly (2', 2", 2"', 2"") respectively being combined to form groups for which the information is consistently transmitted.

2. Method according to Claim 1, **characterized in that** the speed of the vehicle (2) is used to determine the likely residence time of the observer (1) in an area (5) with a good view of an object (4) in the environment of the observer (1), and automatic acoustic or visual transmission of information relating to this object (4) is started at a time which ensures that all information relating to the object (4) is transmitted before the observer (1) leaves the area (5) with a good view of this object (4).

3. Method according to Claim 1 or 2, **characterized in that** the transmitted information comprises at least the announcement of objects (4, 4') which become visible in the environment of the observer (1), and the announcement of objects (4, 4') which become visible is carried out with the announcement of the expected manner of visibility of the objects (4, 4') before the respective objects (4, 4') become visible to the observer.

4. Method according to Claim 3, **characterized in that** an actual check of the visibility of the objects (4, 4') likely to be visible according to the reconstruction is additionally carried out by detecting line-of-sight obstructions (7), the result of the actual check of the visibility likewise being taken into account when defining how and/or when stored information is transmitted to the observer (1) in the vehicle (2).

5. Method according to one of Claims 1 to 4, **characterized in that** the viewing area from at least one observer position with respect to a plurality of objects (4, 4') in the environment of the observer (1) is reconstructed, and/or the transmitted information comprises information relating to a plurality of adjacent objects (4, 4').

6. Method according to one of Claims 1 to 5, **characterized in that** the information to be transmitted is selected after the head and/or eye position of an observer (1) has been detected.

7. Method according to one of Claims 1 to 6, **characterized in that** information relating to non-visible objects (4, 4') is transmitted and is combined with a virtual, videographic or photographic representation of the non-visible objects (4, 4') on a display means.

8. Method according to one of Claims 1 to 7, **characterized in that** route planning is included and ensures likely visibility of predefined objects (4, 4').

9. Apparatus for carrying out the method according to one of Claims 1 to 8, comprising at least one data processing unit (9) with access to storage media (10, 11) containing data which describe the vehicle environment, the data processing unit (9) having means for carrying out a check of the visibility of individual objects (4, 4') in the data stock from predefined positions using said data and for obtaining information relating to the manner of visibility of the objects (4, 4') from the checked positions, at least one output unit (12) which can be used to transmit information relating to individual objects (4, 4') obtained from the data stock and information relating to the manner of visibility of these objects (4, 4') to at least one vehicle passenger on the basis of at least one observer position, and at least one synchronization means (15, 16) which is designed to ensure that the transmission of information is synchronized with the reaching of positions at which the transmitted information is intended to be provided, **characterized in that** the apparatus is set up in such a manner that the method is carried out for a plurality of observer positions inside a vehicle (2) or a vehicle assembly (2', 2", 2"', 2'''') independently of one another, a plurality of observer positions inside a vehicle (2) or a vehicle assembly (2', 2", 2"', 2"") respectively being combined to form groups for which the information is consistently transmitted.

10. Apparatus according to Claim 9, **characterized in that** the storage media comprise at least one replaceable data storage medium (10).

11. Apparatus according to Claim 9 or 10, **characterized in that** the storage media comprise at least one permanently installed mass memory (11).

12. Apparatus according to one of Claims 9 to 11, **characterized in that** the synchronization means comprise at least one means (16) for automatic position determination.

13. Apparatus according to one of Claims 9 to 12, **characterized in that** the synchronization means comprise at least one timer (15).

14. Apparatus according to one of Claims 9 to 13, **characterized in that** the output unit (12) has means for visual (13) and acoustic (14) information transmission.

15. Apparatus according to one of Claims 9 to 14, **characterized in that** the data processing unit (9) has means for linking data stored for individual objects (4, 4') as a result of the position-dependent visibility check with information from which the manner of visibility of the objects (4, 4') from checked positions can be gathered.

16. Apparatus according to one of Claims 9 to 15, **characterized in that** means (8) are included and can be used for an actual check of the visibility of objects (4, 4') after an observer position has been reached.

17. Apparatus according to one of Claims 9 to 16, **characterized in that** the apparatus belongs to an interactive guidebook.

## Revendications

1. Procédé de communication automatisée d'informations en rapport avec un objet à au moins un occupant de véhicule faisant office d'observateur mobile (1) en fonction de sa position, selon lequel, à partir des données qui décrivent l'environnement du véhicule (2), est reconstruite une zone de visibilité d'au moins une position d'observateur en direction d'au moins un objet (4) fixe qui se trouve dans l'environnement de l'observateur (1) et auquel se rapportent au moins partiellement les informations, un contrôle étant effectué pour vérifier de quelle manière l'objet (4) est visible depuis cette position d'observateur, la manière de laquelle et/ou le moment auquel les informations enregistrées seront communiquées à l'observateur (1) dans le véhicule (2) étant définis en fonction du résultat de ce contrôle de la visibilité, **caractérisé en ce que** la mise en oeuvre du procédé a lieu indépendamment les unes des autres pour plusieurs positions d'observateur à l'intérieur d'un véhicule (2) ou d'un véhicule composé (2', 2", 2"', 2"") et plusieurs positions d'observateur à l'intérieur d'un véhicule (2) ou d'un véhicule composé (2', 2", 2"', 2"") étant respectivement assemblées en groupes pour lesquels les informations sont communiquées de manière homogène.

2. Procédé selon la revendication 1, **caractérisé en ce que** le temps de séjour probable de l'observateur (1) dans une zone (5) avec une bonne visibilité sur un objet (4) qui se trouve dans l'environnement de l'observateur (1) est déterminé à partir de la vitesse du véhicule (2) et une communication sonore ou visuelle automatique d'informations au sujet de cet objet (4) commence à un instant qui garantit que toutes les informations concernant l'objet (4) sont communiquées avant que l'observateur (1) quitte la zone (5) avec une bonne visibilité sur cet objet (4).

3. Procédé selon la revendication 1 ou 2, **caractérisé en ce que** les informations communiquées comprennent au moins l'annonce des objets (4, 4') qui deviennent visibles dans l'environnement de l'observateur (1) et l'annonce des objets (4, 4') qui deviennent visibles est réalisée en annonçant la manière attendue dont les objets (4, 4') deviendront visibles avant que les objets respectifs (4, 4') ne deviennent visibles pour l'observateur.

4. Procédé selon la revendication 3, **caractérisé en ce qu'**un contrôle effectif de la visibilité des objets (4, 4') probablement visibles selon la reconstruction est en outre effectué **en ce que** les obstacles à la visibilité (7) sont détectés, le résultat du contrôle effectif de la visibilité étant également pris en compte lors de la détermination de la manière de laquelle et/ou du moment auquel les informations enregistrées seront communiquées à l'observateur (1) dans le véhicule (2).

5. Procédé selon l'une des revendications 1 à 4, **caractérisé en ce que** la zone de visibilité d'au moins une position d'observateur vers plusieurs objets (4, 4') qui se trouvent dans l'environnement de l'observateur (1) est reconstruite et/ou les informations communiquées comprennent des informations sur plusieurs objets (4, 4') voisins.

6. Procédé selon l'une des revendications 1 à 5, **caractérisé en ce qu'**une sélection des informations à communiquer est effectuée d'après une détection de la position de la tête et/ou des yeux d'un observateur (1).

7. Procédé selon l'une des revendications 1 à 6, **caractérisé en ce que** les informations sur des objets (4, 4') non visibles sont communiquées et sont associées avec une représentation virtuelle, vidéographique ou photographique des objets (4, 4') non visibles sur un moyen d'affichage.

8. Procédé selon l'une des revendications 1 à 7, **caractérisé en ce qu'**un plan du trajet est inclus, lequel garantit une visibilité probable d'objets (4, 4') prédéfinis.

9. Dispositif pour mettre en oeuvre le procédé selon l'une des revendications 1 à 8, comprenant au moins une unité de traitement de données (9) disposant d'un accès à des supports de mémorisation (10, 11) sur lesquels se trouvent des données qui décrivent l'environnement du véhicule, l'unité de traitement de données (9) disposant de moyens pour, à l'aide de ces données, effectuer un contrôle de la visibilité d'objets individuels (4, 4') inclus dans la base de données depuis des positions prédéfinies et obtenir des informations sur la manière dont les objets (4, 4') deviennent visibles depuis les positions contrôlées, au moins une unité de sortie (12) par le biais de laquelle des informations en rapport avec les objets individuels (4, 4'), obtenues à partir de la base de données, et des informations sur la manière dont ces objets (4, 4') deviennent visibles en fonction d'au moins une position d'observateur peuvent être communiquées à au moins un occupant de véhicule, et au moins un moyen (15, 16) de synchronisation qui est conçu pour veiller à une synchronisation de la communication des informations avec le moment d'atteindre la position à laquelle les informations communiquées doivent être mises à disposition, **caractérisé en ce que** le dispositif est configuré de telle sorte que la mise en oeuvre du procédé a lieu indépendamment les unes des autres pour plusieurs positions d'observateur à l'intérieur d'un véhicule (2) ou d'un véhicule composé (2', 2", 2"', 2"") et plusieurs positions d'observateur à l'intérieur d'un véhicule (2) ou d'un véhicule composé (2', 2", 2"', 2"") étant respectivement assemblées en groupes pour lesquels les informations sont communiquées de manière homogène.

10. Dispositif selon la revendication 9, **caractérisé en ce que** les supports de mémorisation comprennent au moins un support de données amovible (10).

11. Dispositif selon la revendication 9 ou 10, **caractérisé en ce que** les supports de mémorisation comprennent au moins une mémoire de masse (11) installée à demeure.

12. Dispositif selon l'une des revendications 9 à 11, **caractérisé en ce que** les moyens de synchronisation comprennent au moins un moyen (16) de détermination automatique de la position.

13. Dispositif selon l'une des revendications 9 à 12, **caractérisé en ce que** les moyens de synchronisation comprennent au moins un temporisateur (15).

14. Dispositif selon l'une des revendications 9 à 13, **caractérisé en ce que** l'unité de sortie (12) dispose de moyens de communication visuelle (13) et sonore (14) d'informations.

15. Dispositif selon l'une des revendications 9 à 14, **caractérisé en ce que** l'unité de traitement de données (9) dispose de moyens pour associer les données mémorisées en résultat du contrôle de visibilité en fonction de la position des objets individuels (4, 4') à des informations desquelles peut être extraite la manière dont les objets (4, 4') observés depuis les positions contrôlées deviendront visibles.

16. Dispositif selon l'une des revendications 9 à 15, **caractérisé en ce que** des moyens (8) sont inclus qui peuvent être utilisés pour un contrôle effectif de la visibilité des objets (4, 4') après avoir atteint une position d'observateur.

17. Dispositif selon l'une des revendications 9 à 16, **caractérisé en ce que** le dispositif fait partie d'un guide de voyage interactif.
